# EUROPÄISCHE PATENTSCHRIFT

(11) **EP 0 474 624 B1**
(45) Veröffentlichungstag und Bekanntmachung des Hinweises auf die Patenterteilung: **28.02.1996**
(21) Anmeldenummer: 91890193.5
(22) Anmeldetag: 02.09.1991
(51) Int. Cl.: H04L 9/08

(54) **Verfahren zum Verschlüsseln von Binärinformationen sowie Vorrichtung zur Durchführung dieses Verfahrens**
Method for enciphering binary information and apparatus for implementing said method
Procédé de chiffrage d'informations binaires et dispositif pour réaliser ce procédé

(30) Priorität: 06.09.1990 AT 1825/90
(43) Veröffentlichungstag der Anmeldung: 11.03.1992
(73) Patentinhaber: Alcatel Austria Aktiengesellschaft, A-1210 Wien (AT)
(72) Erfinder: Wolfgang, Johann, Ing., A-1210 Wien (AT); Hahn, Alois, Ing., A-1210 Wien (AT)
(74) Vertreter: Pohl, Herbert, Dipl.-Ing

(56) Entgegenhaltungen:
- EP-A- 0 411 597
- WO-A-84/00457
- PROCEEDINGS OF THE 1987 IEEE/IEICE GLOBAL TELECOMMUNICATIONS CONFERENCE, Bd. 3, November 1985, (NY), Seiten 1439 - 1443 TOKURA ET AL 'A Broadband Subscriber Network using Optical Star Couples'.

## Beschreibung

Die Erfindung bezieht sich auf ein Verfahren zum Verschlüsseln von Binärinformationen in einem, insbesondere optischen, Übertragungsnetzwerk mit stern-, bus- bzw. baumförmiger Struktur, bei welchem eine Anzahl von Endstellen mit einer Zentralstelle verbunden ist und die Übertragung innerhalb von jeweils einer Endstelle zugewiesenen Zeitschlitzen in einem Zeitmultiplexverfahren erfolgt, sowie auf eine Vorrichtung zur Durchführung dieses Verfahrens.

Prinzipiell sind optische Übertragungsnetzwerke gegen Abhören aufgrund der physikalischen Grundlagen besser gesichert als drahtgebundene Netzwerke oder Funkstrecken. Bei passiven optischen Übertragungsnetzwerken mit baumartiger Struktur ist der Übertragungsweg von einer Endstelle zur Zentralstelle aufgrund des physikalischen Verhaltens der Verzweigungsstellen weitgehend gegen unbefugtes Abhören gesichert. Die Informationsübertragung in derartigen Netzwerken erfolgt, wie vorausgesetzt, von der Zentralstelle zu den Endstellen abwärts bzw. von den Endstellen zur Zentralstelle aufwärts in einem Zeitmultiplexverfahren, bei welchem jeder Station ein bestimmter Zeitschlitz in einem durch Synchronisiersignale gebildeten Informationsrahmen zugeteilt ist. Der gesamte Abwärtsrahmen enthält bei einer derartigen Struktur des Übertragungsnetzwerkes die Informationen für alle Endstellen, wobei der Aufwand, um Informationen einer anderen Endstelle als derjenigen Endstelle, für die sie bestimmt sind zu lesen, relativ gering ist. In der umgekehrten Richtung kann durch die Richtwirkung der Koppler im Netzwerk und durch entsprechende Schaltungsvorkehrungen in der Zentralstelle die Aufwärtsinformation weitgehend geschützt übertragen werden und an die Endstellen gelangen praktisch bis zur Unkenntlichkeit abgeschwächte Signale. Die zeitliche Ordnung des Mulitplexrahmens ist nur in Senderichtung gegeben, so daß rückgestreute Information nicht nur stark abgeschwächt wird, sondern sich durch unterschiedliche Laufzeiten auch zeitlich überlagert. Während somit die Übertragungsrichtung aufwärts hinlänglich sicher gegen unbefugtes Abhören ist, ist die Übertragungsrichtung abwärts nur durch geeignete Verschlüsselung zu sichern.

Bei der Übertragung von Binärinformationen liegt es nahe, eine binäre Folge als Schlüssel zu verwenden und die Informationen Bit für Bit mit dieser Schlüsselfolge zu verknüpfen. Eine geeignete Verknüpfung kann beispielsweise durch Addition modulo 2 vorgenommen werden. Die empfangsseitige Entschlüsselung erfolgt bei diesem Verfahren durch Wiederholung der Operation mit dem gleichen Schlüssel, wobei naturgemäß auch andere Verknüpfungen und Entschlüsselungen denkbar sind. Die Auswahl geeigneter Schlüsselfolgen sowie deren Erzeugung, beispielsweise durch rückgekoppelte Schieberegister, ist bekannter Stand der Technik und zählt zu den Grundlagen der Kryptologie. Wenn jede Endstelle einen individuellen Schlüssel erzeugt und diesen an die Zentralstelle sendet, so kann die Zentralstelle die Information an jede Endstelle mit dem jeweiligen Schlüssel verschlüsseln. So ist beispielsweise aus der DE 39 25 605 ein Verfahren bekannt, bei dem in den Teilnehmerstellen jeweils eine Verwürfelungsschaltung vorgesehen ist, die während des Verbindungsaufbaus einen Codierschlüssel initiiert und diesen zur Vermittlungsstelle sendet, wonach die von der Vermittlungsstelle zur Teilnehmerstelle zu übertragenden Digitalsignale mit diesem Codierschlüssel verschlüsselt gesendet werden. Da die Übertragungseinrichtung aufwärts aufgrund der physikalischen Gegebenheiten des Netzes zumindest im Falle eines optischen Übertragungsnetzwerkes weitgehend abhörsicher ist, kann die Schlüsselverteilung in dieser einfachen Form geschehen und es ist nicht erforderlich, aufwendige Verfahren der Schlüsselerzeugung und -verteilung zu verwenden. Aufwendige Verschlüsselungsverfahren sind aufgrund ihrer Komplexität nicht ohne weiteres geeignet, beispielsweise binär kodierte Sprache in der Telefonie in Echtzeit zu verschlüsseln und entschlüsseln.

Für ein Verschlüsselungssystem unter der Annahme, daß binär kodierte Sprache (Telefonie) zwischen Endstelle und Hauptstelle übertragen wird, bleibt somit aufgrund der zeitlichen Begrenzung die Möglichkeit, eine Schlüsselfolge geringer Länge, d.h. geringer Anzahl von Bit, zu wählen, wodurch allerdings die Entschlüsselung wesentlich erleichtert wird.

Eine binäre Schlüsselfolge muß eine ausreichende Länge, d.h. Anzahl von Bit, aufweisen, um die geforderte Abhörsicherheit zu gewährleisten. Bei einer Länge von beispielsweise 4 Bit genügen nur 16 Versuche um die Information zu entschlüsseln. Angemessener Schutz gegenüber unerwünschter Entschlüsselung bieten Schlüssellängen von mehr als 16 Bit, wobei teilweise Schlüssellängen von 64 Bit für angemessen erachtet werden. Ideal wäre naturgemäß eine unendliche Schlüsselfolge in Form eines in einem echt stochastischen Prozeß generierten Schlüssels zu verwenden, wobei ein unendlich langer Schlüssel aus naheliegenden Gründen nicht zur Hauptstelle übermittelt werden kann. Darüber hinaus setzt ein derartiges Verfahren einen hohen Aufwand zur Erzeugung des Schlüssels in den einzelnen Endstellen voraus.

Wenn beispielsweise ein geeigneter Schlüssel von z.B. 24 Bit beim Beginn einer Übertragung bzw. eines Telefongespräches in der Endstelle erzeugt wird und an die Hauptstelle übermittelt wird und dieser Schlüssel in der Folge für die ganze Übertragungsdauer zur Verschlüsselung der Information in Abwärtsrichtung verwendet wird, ergeben sich im Falle der Telefonie weitere Probleme. Wird die Schlüsselübertragung durch einen Übertragungsfehler (Bitfehler) betroffen, so verwendet die Hauptstelle für die Dauer der Übertragung einen verfälschten Schlüssel und die Information kann in der Folge in der Endstelle nicht richtig rückgewonnen werden. Erst bei der nächsten Übertragung, für die ein neuer Schlüssel vereinbart wird oder der gleiche wiederum übertragen wird, wird der Fehler richtiggestellt.

Die Synchronisierung des Verschlüsselungsvorganges erfordert einen weiteren hohen Aufwand. Hauptstelle und Endstelle müssen nämlich auf ein Bit genau gleichzeitig mit dem Verschlüsseln respektive Entschlüsseln beginnen. Bei einer binär kodierten PCM-Telefonverbindung ist dies nahezu unmöglich, da der exakte Beginn des Gespräches aus dem Bitstrom nicht ohne weiteres feststellbar ist.

Um diese Probleme zu umgehen, könnte man für die Verschlüsselung der Daten in jedem Informationsrahmen bzw. Zeitschlitz einen neuen Schlüssel verwenden. Der in einem Rahmen aufwärts zur Hauptstelle gesendete Schlüssel wird dabei zur Verschlüsselung der Daten des nächstfolgenden Rahmens abwärts zur Endstelle verwendet. Für eine einfache Verschlüsselung bzw. Entschlüsselung soll der Schlüssel weiterhin die gleiche Länge wie das zu verschlüsselnde Informationswort aufweisen und es ist beispielsweise für ein 8-Bit-PCM-Wort ein 8 Bit langer Schlüssel zu verwenden. Eine Schlüsselwortlänge von 8 Bit bietet aber nur ungenügende Sicherheit und in der Aufwärtsrichtung wird bei einem derartigen Verfahren die zu übertragende Informationsmenge verdoppelt, da zu jedem Informationswort ein gleich langes Schlüsselwort hinzukommt. Ein derartiges Verfahren ist daher weder sehr sicher noch effizient. Die Verdoppelung der Informationsmenge kann dadurch vermieden werden, daß als Schlüssel das jeweilige vorangegangene Informationswort, beispielsweise ein 8 Bit PCM-Sprachsample aus der Aufwärtsrichtung herangezogen wird. Die zusätzliche Übermittlung eines Schlüssels entfällt, wodurch das Verfahren effizient wird. Nachteilig ist jedoch die schlechte Eignung des Informationswortes als Schlüssel. Ein PCM-Sprachsample weist in den Sprechpausen ein definiertes Ruhemuster auf und es ist die Wahrscheinlichkeit der Bitänderung bei den höherwertigen Bits wesentlich geringer als bei niedrigwertigen. In einer Konversation ist also, während der ferne Teilnehmer spricht, der Schlüssel, mit dem seine Sprachinformation verschlüsselt wird, im wesentlichen bekannt, da der Gesprächspartner an der Endstelle, dessen Sprachsamples den Schlüssel bilden, schweigt und daher ein Ruhemuster gesendet wird. Ein derartiges Verfahren ist für digitale Datenübertragung, die in der Regel nur halbduplex abläuft, ungeeignet, so daß, während ein Datenstrom abwärts übertragen wird, überhaupt kein Schlüssel aus der Aufwärtsrichtung gewonnen werden kann, da dort nur ein bekanntes Ruhemuster gesendet wird.

Die Erfindung zielt darauf ab, ein einfaches und effizientes Verfahren zum Verschlüsseln von Binärinformationen, insbesondere für die digitale Sprachübertragung, zu schaffen, welches in Echtzeit ausgeführt werden kann und gleichzeitig ein hohes Maß an Sicherheit gewährleistet. Zur Lösung dieser Aufgabe besteht das erfindungsgemäße Verfahren im wesentlichen darin, daß ein aus Schlüsselsegmenten zusammengesetzter Schlüssel verwendet wird, daß von der Endstelle ein Schlüsselsegment in Form einer Anzahl von Bit, welche kleiner ist als die im Zeitschlitz gesendete Bitzahl und kleiner ist als die Bitzahl des vollständigen Schlüssels, an die Zentralstelle gesandt wird, daß der Schlüssel im Verlauf der Übertragung zwischen einer Endstelle und der Zentralstelle durch Ersatz eines im Schlüssel enthaltenen Schlüsselsegments durch das jeweils neu übertragene Schlüsselsegment aktualisiert wird und daß die von der Zentralstelle an die Endstelle gesendeten Binärinformationen mit dem jeweils aktualisierten Schlüssel verschlüsselt werden. Dadurch, daß von der Endstelle jeweils nur ein Schlüsselsegment, d.h. ein Teil des vollständigen Schlüssels, übertragen wird, kann die geforderte Mindestlänge für einen sicheren Schlüssel gewährleistet werden, ohne daß die Effizienz der Übertragung wesentlich beeinträchtigt wird. Dadurch, daß jeweils nur ein Schlüsselsegment übertragen wird, kann auch der Aufwand für die Generierung von Zufallszahlen in der Endstufe verringert werden. Ein Schlüsselsegment kann nämlich aus einer geeigneten beliebig langen Binärfolge generiert werden, wobei jeder Ausschnitt aus einer derartigen beliebig langen Binärfolge als Schlüssel mit der geforderten Sicherheit geeignet ist. Um eine derartige beliebig lange Binärfolge zu generieren, kann ein rückgekoppeltes Schieberegister, welches eine Pseudozufallsfolge generiert, oder auch ein echter stochastischer binärer Zufallsprozeß basierend auf einer Rauschquelle verwendet werden. Es kann aber auch ein beliebig langer Schlüssel in einen Festwertspeicher der Endstelle abgelegt werden, wobei die Auswahl des Schlüsselsegmentes die Qualität des aus Schlüsselsegmenten zusammengesetzten Schlüssels in keiner Weise beeinträchigt. Ein derartiges Schlüsselsegment kann zunächst aufwärts relativ sicher übertragen werden. Da jeder zeitliche Ausschnit aus einer Zufallsfolge wiederum eine Zufallsfolge ergibt, wird die stochastische Eigenschaft des Schlüsselsegmentes nicht verändert. Die Segmentierung vermeidet das Anwachsen der Informationsmenge in Aufwärtsrichtung, wie sie bei der Übermittlung des gesamten Schlüssels unvermeidlich wäre. Dadurch, daß nun in der Zentralstelle unter Berücksichtigung des jeweils übertragenen Schlüsselsegmentes eine Aktualisierung des Schlüssels erfolgt, kann insgesamt ein entsprechend langer Schlüssel Verwendung finden, wobei das übertragene Schlüsselsegment vor Beginn des Verschlüsselungs- bzw. Entschlüsselungsvorganges für einen Informationswert unter Ersatz eines jeweils vorangehenden ältesten Segmentes beispielsweise in ein Schlüsselregister eingeschoben werden kann.

Entsprechend einer bevorzugten Ausbildung des erfindungsgemäßen Verfahrens wird somit ein neues Schlüsselsegment als Ersatz für das jeweils älteste Schlüsselsegment des Schlüssels für die Übertragung verwendet, wobei bevorzugt die jeweils durch Schlüsselsegmente aktualisierten Schlüssel für die Übertragung in der Endstelle und einem für die Endstelle spezifischen Speicher der Zentralstelle gespeichert werden. Diese simultane Abspeicherung in den beiden Schlüsselregistern führt in der Folge dazu, daß der komplette Schlüssel in bestimmten vorgegebenen Zeitintervallen erneuert wird. Die Erneuerungsrate des Schlüssels hat hiebei den Vorteil, daß selbst dann, wenn ein Schlüsselsegment während der Übertragung verfälscht wurde, eine falsche Verschlüsselung nur über einen Zeitraum aufrechterhalten wird, bis der Schlüssel vollständig erneuert wird. Nach Abschluß der vollständigen Erneuerung des kompletten Schlüssel erfolgt die Verschlüsselung für jeden Informationswort mit jeweils teilweise neuen Schlüsseln und es treten daher keine Synchronisierungsprobleme auf.

Wie bereits eingangs erwähnt, wird mit Vorteil so vorgegangen, daß die Schlüsselsegmente von einer Zufallszahl abgeleitet werden, wobei es aufgrund der Übertragung von Schlüsselsegmenten ohne weiteres möglich ist, ein echtes, entsprechend langes Zufallswort zur Auswahl von Segmenten für den Aufbau eines Schlüssels heranzuziehen. Auf diese Weise wird der Aufwand in jeder Endstelle wesentlich herabgesetzt.

Um die Sicherheit gegen Entschlüsselung weiter zu erhöhen ist es vorteilhaft, die Wiederholungsrate der Verschlüsselung innerhalb eines Sendezeitschlitzes bzw. innerhalb des Zeitraumes, über welchen der gleiche Schlüssel aufrecht erhalten wird, so gering wir möglich zu machen. Mit Vorteil wird hiebei so vorgegangen, daß ein aus Schlüsselsegmenten zusammengesetzter Schlüssel verwendet wird, dessen Bitzahl wenigstens einem Informationswort, insbesondere der Bitzahl eines Sendezeitschlitzes, entspricht. Wenn in einem Sendezeitschlitz eine Mehrzahl von Informationsworten übertragen wird, wiederholt sich zwar die identische Verschlüsselung in Übereinstimmung mit der Anzahl der gesendeten Informationsworte. Da jedoch der Schlüssel für jeden Sendezeitschlitz aktualisiert wird, wird hier eine hinreichende Sicherheit gewährleistet. Eine Wiederholung der Verschlüsselung innerhalb eines Sendezeitschlitzes läßt sich jedoch dann gänzlich vermeiden, wenn ein aus Schlüsselsegmenten zusammengesetzter Schlüssel Verwendung findet, dessen Bitzahl der Bitzahl eines Sendezeitschlitzes entspricht. Insgesamt kann pro Informationsrahmen ein neues Segment übertragen werden, wodurch der komplette Schlüssel nach einer maximalen Anzahl von Rahmen erneuert wird. Bei Verwendung eines Bits und eines 8-Bit-Schlüssels erfolgt somit die Erneuerung des vollständigen Schlüssels nach einer Zeit von 8 Rahmen.

Die gewünschte Aktualisierung des Schlüssels mit jedem ankommenden Schlüsselsegment kann bei der erfindungsgemäßen Vorrichtung zur Durchführung dieses Verfahrens in einfacher Weise dadurch gewährleistet werden, daß die Endstelle und die Zentralstelle einen überschreibbaren Schlüsselspeicher aufweisen. Der Schlüsselspeicher kann hiebei relativ lange Schlüssel enthalten, wobei die Zeit für eine vollständige Erneuerung des Schlüssels unter Abnahme der Effizienz der Übertragung dadurch verkürzt werden kann, daß je Informationsrahmen ein entsprechend größeres Schlüsselsegment übertragen wird. Der Schlüsselspeicher kann hiebei mit Vorteil ein Schieberegister, einen Umschalter und einen Seriell/Parallelwandler umfassen, so daß eine getaktete Veränderung des Schlüssels auch dann erfolgen kann, wenn keine neuen Schlüsselsegmente übertragen werden. Mit einer derartigen Schaltungsanordnung können Schlüsselsegmente zyklisch getauscht werden.

Die Erfindung wird nachfolgend an Hand eines in der Zeichnung schematisch dargestellten Ausführungsbeispieles näher erläutert. Es zeigt: Fig.1 ein für die Anwendung des erfindungsgemäßen Verfahrens geeignetes optiches Übertragungsnetzwerk; Fig.2 ausschnittweise ein Zeitmulitplex-Rahmenformat für das Übertragungsnetzwerk; Fig.3 die Übertragung in beiden Richtungen mit Rahmensynchronisation und Übermittlung von Schlüsselsegmenten; Fig.4 die Einrichtung einer Zentralstelle sowie einer der daran angeschlossenen Endstellen und Fig.5 ein Taktdiagram eines Schlüsselregisters.

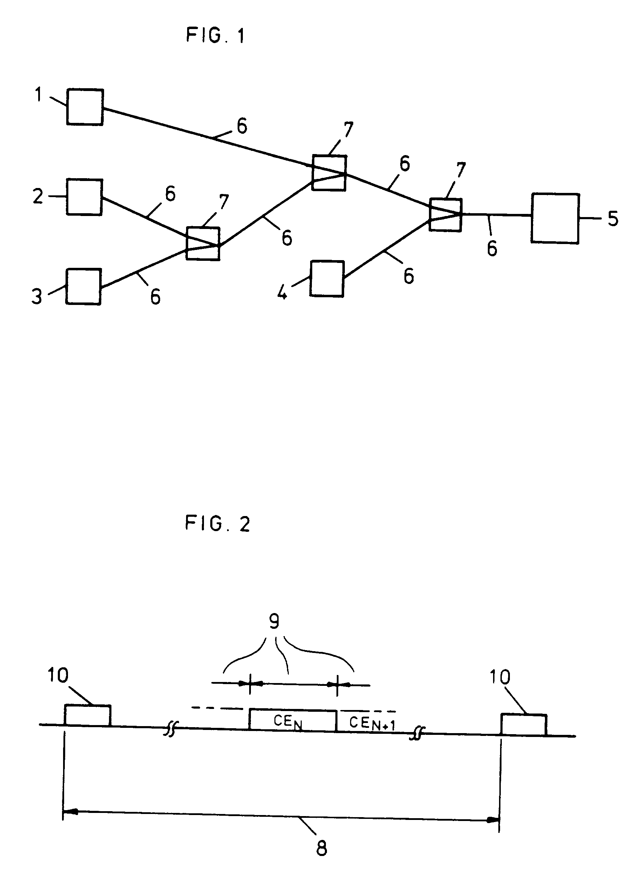

Fig.1 zeigt schematisch ein optisches Übertragungsnetzwerk mit baumartiger Struktur, wobei jeweils ein Lichtwellenleiter für die Signalübertragung in beiden Richtungen eingesetzt ist. Hiebei erfolgt die Nachrichtenübermittlung zwischen Endstellen 1, 2, 3 und 4 einerseits und einer Zentralstelle 5 anderseits über Lichtwellenleiter 6 und Strahlenteiler 7. Für jede Verbindung existiert ein eindeutiger Weg mit konstanter Länge und einer dieser Länge entsprechenden Signallaufzeit sowie jeweils einer jeder Übertragungsrichtung zuzuordnenden Signaldämpfung. Von den Endstellen 1, 2, 3, 4 ausgesandte Signale (Informationsfluß aufwärts) erreichen die Zentralstelle 5 mit einem für störungsfreien Empfang geeigneten Pegel. In den Strahlenteilern 7 sowie an Verbindungsstellen der Lichtwellenleiter 6 finden zwar geringfügige Signalreflexionen statt, jedoch wird der Pegel von solchen Reflexionen eines von einer Endstelle ausgesandten Signals normalerweise viel zu klein sein, als daß das reflektierte Signal von einer anderen Endstelle decodiert werden könnte. Dagegen gelangt jedes von der Zentralstelle 5 ausgesandte Signal (Informationsfluß abwärts) mit ungefähr gleichem, hohem Pegel an alle Endstellen 1, 2, 3, 4. Bei Einhaltung der vorgeschriebenen Betriebsbedingungen für das Zeitmultiplexsystem des Übertragungsnetzwerkes kann aber dennoch jede Endstelle nur das von der Zentralstelle für sie bestimmte Signal decodieren.

Zu diesem Zweck weist ein zeitlicher Rahmen 8, der beispielsweise eine Dauer von 125 µs haben kann, eine der Anzahl von Endstellen entsprechende Anzahl von Zeitschlitzen 9 auf, wobei jeder Rahmen 8 mit einem Synchronsignalmuster 10 beginnt.

Während für den Informationsfluß aufwärts Geheimhaltung der übertragenen Daten praktisch gewährleistet ist, ist dies für den Informationsfluß abwärts dann nicht sichergestellt, wenn am Empfangsteil einer Endstelle hard- und/oder softwaremäßige Abänderungen vorgenommen werden.

Zur Verbesserung des Datenschutzes für den Informationsfluß abwärts im Falle von Manipulationen an einer Endstelle im vorerwähnten Sinne wird gemäß der Erfindung eine Verschlüsselung der von der Zentralstelle ausgesandten Daten mit einem von der empfangsberechtigten Endstelle an die Zentralstelle übermittelten Schlüssel vorgeschlagen, wobei der Schlüssel nur dieser einen Endstelle bekannt ist.

Wenn, wie im vorliegenden Fall, für beide Übertragungsrichtungen ein einziger Lichtwellenleiter eingesetzt wird, dann ist ein Überrahmen vorzusehen, der aufeinanderfolgend jeweils einen Rahmen für den Informationsfluß abwärts und einen Rahmen für den Informationsfluß aufwärts umfaßt. Diese beiden Rahmen sind durch eine Schutzzeit voneinander getrennt, die mindestens der doppelten größten Signallaufzeit zwischen einer Endstelle und der Zentralstelle entspricht.

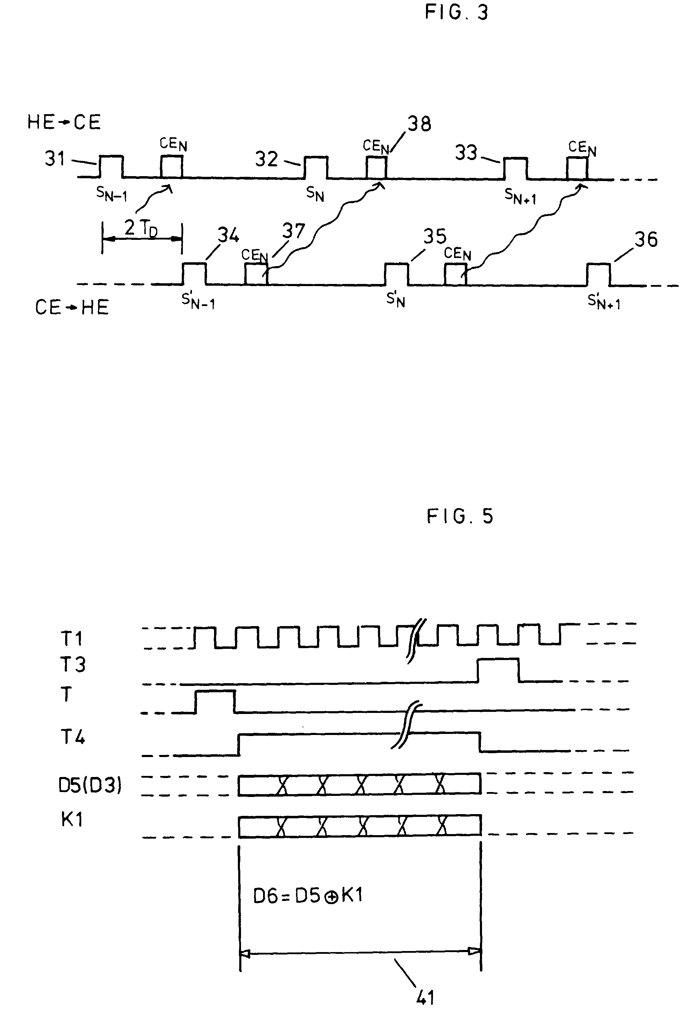

Der grundsätzliche Vorgang der Rahmensynchronisation sowie der Übermittlung der Schlüssel für das folgende Informationswort ist in Fig.3 dargestellt. Die Zentralstelle generiert einen Rahmen abwärts, beginnend mit dem Synchronsignal 31. Der äquivalente Rahmen von der Endstelle aufwärts beginnt mit dem Synchronsignal 34, trifft aber an der Zentralstelle erst nach der zweifachen Laufzeit Td ein. Die Endstelle CE_{N} übermittelt in diesem Rahmen im Zeitschlitz 37 einen neuen Schlüssel (Schlüsselsegment), der im darauffolgenden Abwärtsrahmen 32 die im Zeitschlitz 38 enthaltene Information verschlüsselt. Der im Rahmen 35 aufwärts geschickte Schlüssel kommt sodann im Abwärtsrahmen 33 zur Verwendung usw.

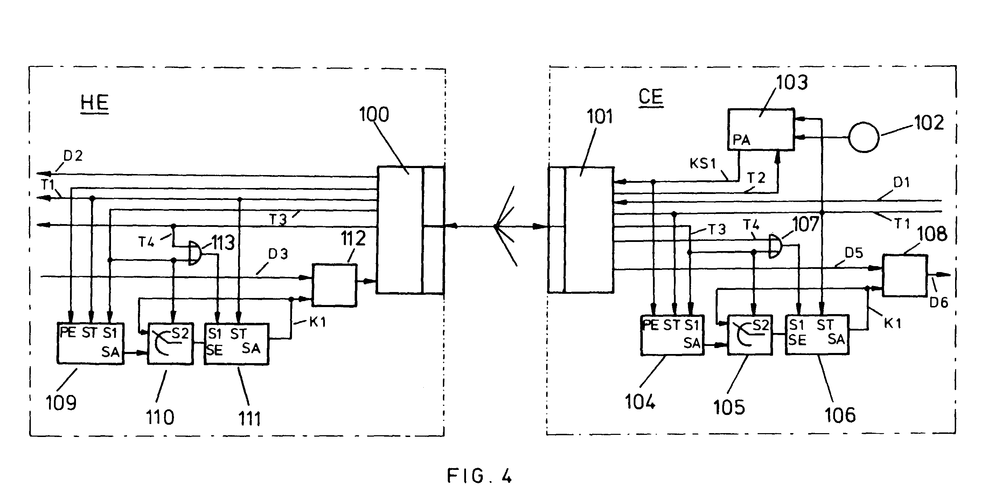

Fig.4 zeigt die Anordnung bestehend aus der Zentralstelle HE und einer Endstelle CE. Die Übertragungseinheit 100 umfaßt einen Taktgenerator sowie die Erzeugung der Synchronisiersignale, baut damit die erforderlichen Informationsrahmen auf und sendet im jeweiligen Zeitschlitz Informationen abwärts zur Endstelle. Die entsprechende Übertragungseinheit 101 in der Endstelle gewinnt Takt und Rahmensynchronisation zurück und sendet in den ihr zugewiesenen Zeitschlitzen Informationen aufwärts zur Zentralstelle.

Ein Zufallsgenerator 102 erzeugt eine Zufallsfolge, aus der eine Folge von Bits, beispielsweise 1 Bit, zum Zeitpunkt T2 entnommen und im Register 103 gespeichert wird. Der Inhalt des Registers ist das Schlüsselsegment KS1, das den aufwärts zu sendenden Daten D1 hinzugefügt wird. In der Zentralstelle werden die aufwärts gesendeten Daten nach Zeitverzögerung als Datenstrom D2 empfangen, ebenso das Schlüsselsegment KS1. KS1 wird an das Schlüsselregister bestehend aus dem Parallel/Seriell-Wandler 109, dem Umschalter 110 und dem Schieberegister 111, zugeführt. Ein gleichartiges Register besteht in der Endstelle CE (104,105,106).

Die Funktion des Schlüsselregisters wird anhand des Taktdiagrammes Fig.5 beschrieben.

Das Schieberegister 111 wird vom Bittakt T1 am Takteingang ST getaktet. Befindet sich der Steuereingang S1 im Zustand H, so wird mit jedem Takt T1 die Information im Schieberegister um eine Stelle weitergeschoben. Ist der Umschalter 110, gesteuert durch ein LH-Signal an seinem Steuereingang S2, in der Stellung, wo er den Ausgang SA des Schieberegisters 111 mit dessen Eingang SE verbindet, so entsteht ein ringförmiges Register, in dem die Information im Kreis geschoben wird. Das Schieberegister besteht aus einer der Anzahl der pro Zeitschlitz übertragenen Informationsbits entsprechenden Anzahl von Stellen, z.B. 8 Stellen. T4 ist für die Dauer eines Zeitschlitzes 41 logisch H, während T3 logisch L bleibt, so daß der Inhalt des Registers 111 genau einmal rotiert. Der am seriellen Ausgang SA auftretende Schlüssel K1 wird bitweise mit den Abwärts-Daten D3 im Addierer 112 modulo 2 verknüpft und so die Daten verschlüsselt. Das am Parallel/ Seriell-Wandler 109 anstehende neue Schlüsselsegment KS1 wird nach Ende des Zeitschlitzes 41, durch den Takt T3 über den Umschalter 110, der ebenfalls von T3 gesteuert ist, in das Register 111 nachgeschoben. Durch die ODER-Verknüpfung 113 wird S1 für eine der Anzahl der Bits des Schlüsselsegmentes entsprechende Anzahl von Taktperioden T1 logisch H und es wird das Einschieben des Schlüsselsegmentes ermöglicht. Da die Rückführung über 110 geöffnet ist, geht der älteste, d.h. am weitesten rechts stehende Schlüsselteil verloren. Beim nächsten Zeitschlitz rotiert der teilweise erneuerte Schlüssel wiederum und wird sodann in beschriebener Weise durch ein neues Segment KS1 ergänzt.

## Patentansprüche

1. Verfahren zum Verschlüsseln von Binärinformationen in einem, insbesondere optischen, Übertragungsnetzwerk mit stern-, bus- bzw. baumförmiger Struktur, bei welchem eine Anzahl von Endstellen (CE) mit einer Zentralstelle (HE) verbunden ist und die Übertragung innerhalb von jeweils einer Endstelle zugewiesenen Zeitschlitzen (9) in einem Zeitmultiplexverfahren erfolgt, wobei die Endstellen und die Zentralstelle Schlüsselspeicher aufweisen, **dadurch gekennzeichnet,** daß ein aus Schlüsselsegmenten zusammengesetzter Schlüssel verwendet wird, daß von der Endstelle (CE) ein Schlüsselsegment (37) in Form einer Anzahl von Bit, welche kleiner ist als die im Zeitschlitz gesendete Bitzahl und kleiner ist als die Bitzahl des vollständigen Schlüssels, an die Zentralstelle (HE) gesandt wird, daß der Schlüssel im Verlauf der Übertragung zwischen einer Endstelle und der Zentralstelle durch Ersatz eines im Schlüssel enthaltenen Schlüsselsegments durch das jeweils neu übertragene Schlüsselsegment (37) aktualisiert wird und daß die von der Zentralstelle an die Endstelle gesendeten Binärinformationen (38) mit dem jeweils aktualisierten Schlüssel verschlüsselt werden.

2. Verfahren nach Anspruch 1, **dadurch gekennzeichnet,** daß ein neues Schlüsselsegment als Ersatz für das jeweils älteste Schlüsselsegment des Schlüssels für die Übertragung verwendet wird.

3. Verfahren nach Anspruch 1 oder 2, **dadurch gekennzeichnet,** daß die jeweils durch Schlüsselsegmente aktualisierten Schlüssel für die Übertragung in der Endstelle und einem für die Endstelle spezifischen Speicher der Zentralstelle gespeichert werden.

4. Verfahren nach Anspruch 1, 2 oder 3, **dadurch gekennzeichnet,** daß die Schlüsselsegmente von einer Zufallszahl abgeleitet werden.

5. Verfahren nach einem der Ansprüche 1 bis 4, **dadurch gekennzeichnet**, daß die Bitzahl des Schlüssels wenigstens einem Informationswort, insbesondere der Bitzahl eines Sendezeitschlitzes, entspricht.

6. Vorrichtung zur Durchführung des Verfahrens zum Verschlüsseln von Binärinformationen in einem insbesondere optischen Übertragungsnetzwerk mit stern-, bus- bzw. baumförmiger Struktur, bei welchem eine Anzahl von Endstellen (CE) mit einer Zentralstelle (HE) verbunden ist und die Übertragung innerhalb von jeweils einer Endstelle zugewiesenen Zeitschlitzen (9) in einem Zeitmultiplexverfahren erfolgt, wobei die Endstellen und die Zentralstelle Schlüsselspeicher aufweisen, **dadurch gekennzeichnet**, daß die Schlüsselspeicher überschreibbare Speicher sind, daß ein aus Schlüsselsegmenten zusammengesetzter Schlüssel verwendet wird, daß von der Endstelle (CE) ein Schlüsselsegment (37) in Form einer Anzahl von Bit, welche kleiner ist als die im Zeitschlitz gesendete Bitzahl und kleiner ist als die Bitzahl des vollständigen Schlüssels, an die Zentralstelle (HE) gesandt wird, daß der Schlüssel im Verlauf der Übertragung zwischen einer Endstelle und der Zentralstelle durch Ersatz eines im Schlüssel enthaltenen Schlüsselsegmentes durch das jeweils neu übertragene Schlüsselsegment (37) aktualisiert wird und daß die von der Zentralstelle an die Endstelle gesendeten Binärinformationen (38) mit dem jeweils aktualisierten Schlüssel verschlüsselt werden.

7. Vorrichtung nach Anspruch 6, **dadurch gekennzeichnet**, daß der Schlüsselspeicher ein Schieberegister (111,106), einen Umschalter (110, 105) und einen Seriell/Parallelwandler (109, 104) umfaßt.

## Claims

1. Method for encoding binary information within a preferably optical transmission network with star-, bus- or tree-like structure, respectively, in which a number of terminals (CE) is connected to a central station (HE), and transmission is carried out within time slots (9) each assigned to a terminal in a time division multiplex process, whereby terminals and central station contain key memories, **characterized in that** a key combined of key segments is used, **that** from the terminal (CE) a key segment (37) is sent to the central station (HE) in the form of a number of bits which is smaller than the number of bits sent in the time slot and smaller than the number of bits of the complete key, **that** in the course of transmission between a terminal and the central station the key is updated by substituting a key segment contained in the key by the respective newly transmitted key segment (37), **and that** the binary information (38) sent from the central station to the terminal is encoded with the respective updated key.

2. Method according to claim 1, **characterized in that** for the transmission a new key segment is used as a substitute for the respective oldest key segment of the key.

3. Method according to claims 1 or 2, **characterized in that** the respective keys updated by key segments are stored for transmission in the terminal and in a terminal-specific memory of the central station.

4. Method according to claims 1, 2 or 3, **characterized in that** the key segments are derived from a random number.

5. Method according to any of the claims 1 through 4, **characterized in that** the number of bits of the key at least corresponds to an information word, particularly to the number of bits of a transmission time slot.

6. Device for executing the process for encoding binary information in an optical transmission network in particular, with star-, bus-, or tree-like structure, respectively, in which a number of terminals (CE) is connected to a central station (HE), and transmission is carried out within time slots (9) each assigned to a terminal in a time division multiplex process, whereby terminals and central station contain key memories, **characterized in that** the key memories are overwriteable memories, **that** a key combined of key segments is used, **that** from the terminal (CE) a key segment (37) is sent to the central station (HE) in the form of a number of bits which is smaller than the number of bits sent in the time slot and smaller than the number of bits of the complete key, **that** in the course of transmission between a terminal and the central station the key is updated by substituting a key segment contained in the key by the respective newly transmitted key segment (37), **and that** the binary information (38) sent from the central station to the terminal is encoded with the respective updated key.

7. Device according to claim 6, **characterized in that** the key memory includes a shift register (111, 106), a change-over switch (110, 105) and a serial/parallel-converter (109, 104).

## Revendications

1. Procédé de chiffrage d'informations binaires dans un réseau de transmission, en particulier optique, à structure en étoile, de bus ou arborescente, dans lequel un nombre de postes terminaux (CE) sont reliés à un poste central (HE) et dans lequel la transmission s'effectue à l'intérieur d'intervalles de temps (9) affectés respectivement à un poste terminal, dans un procédé de multiplex temporel, les postes terminaux et le poste central présentant des mémoires de chiffres, caractérisé en ce qu'un chiffre composé de segments de chiffre est utilisé, en ce que, depuis le poste terminal (CE), un segment de chiffre (37) est envoyé au poste central (HE) sous la forme d'un nombre de bits qui est inférieur au nombre de bits envoyé pendant l'intervalle de temps et inférieur au nombre de bits du chiffre complet, en ce que le chiffre est actualisé pendant la transmission entre un poste terminal et le poste central par remplacement d'un segment de chiffre contenu dans le chiffre par le segment de chiffre (37) nouvellement transmis à chaque fois et en ce que les informations binaires (38) envoyées depuis le poste central au poste terminal sont chiffrées avec le chiffre actualisé à chaque fois.

2. Procédé selon la revendication 1, caractérisé en ce qu'un nouveau segment de chiffre est utilisé pour la transmission à titre de remplacement du segment de chiffre respectivement le plus ancien du chiffre.

3. Procédé selon la revendication 1 ou 2, caractérisé en ce que les chiffres actualisés respectivement par des segments de chiffre pour la transmission sont mis en mémoire dans le poste terminal et dans une mémoire, spécifique au poste terminal, du poste central.

4. Procédé selon la revendication 1, 2 ou 3, caractérisé en ce que les segments de chiffre sont dérivés d'un nombre aléatoire.

5. Procédé selon l'une des revendications 1 ou 4, caractérisé en ce que le nombre de bits du chiffre correspond au moins à un mot d'information, en particulier au nombre de bits d'un intervalle de temps d'émission.

6. Dispositif pour la réalisation du procédé de chiffrage d'informations binaires dans un réseau de transmission, en particulier optique, à structure en étoile, de bus ou arborescente, dans lequel un nombre de postes terminaux (CE) sont reliés à un poste central (HE) et dans lequel la transmission s'effectue à l'intérieur d'intervalles de temps (9) affectés respectivement à un poste terminal dans un procédé de multiplex temporel, les postes terminaux et le poste central présentant des mémoires de chiffres, caractérisé en ce que les mémoires de chiffres sont des mémoires pouvant être écrasées, en ce qu'un chiffre composé de segments de chiffre est utilisé, en ce que, depuis le poste terminal (CE), un segment de chiffre (37) est envoyé au poste central (HE) sous la forme d'un nombre de bits qui est inférieur au nombre de bits envoyé pendant l'intervalle de temps et inférieur au nombre de bits du chiffre complet, en ce que le chiffre est actualisé pendant la transmission entre un poste terminal et le poste central par remplacement d'un segment de chiffre contenu dans le chiffre par le segment de chiffre (37) nouvellement envoyé à chaque fois et en ce que les informations binaires (38) envoyées depuis le poste central au poste terminal sont chiffrées avec le chiffre actualisé respectif.

7. Dispositif selon la revendication 6, caractérisé en ce que la mémoire de chiffres comprend un registre à décalage (111, 106), un commutateur (110, 105) et un convertisseur sériel/parallèle (109, 104).
